# EUROPEAN PATENT SPECIFICATION

(11) **EP 4 068 473 B1**
(45) Date of publication and mention of the grant of the patent: **04.03.2026**
(21) Application number: 21833803.6
(22) Date of filing: 23.06.2021
(51) Int. Cl.: H01M 10/6554, H01M 10/6551, H01M 10/658, H01M 10/613, H01M 10/625, H01M 10/627, H01M 50/24, H01M 50/20

(54) **BATTERY PACK HAVING STRUCTURE FOR PREVENTING HEAT DIFFUSION BETWEEN ADJACENT BATTERY MODULES, AND ESS AND VEHICLE INCLUDING SAME**
BATTERIEPACK MIT STRUKTUR ZUR VERHINDERUNG VON WÄRMEDIFFUSION ZWISCHEN BENACHBARTEN BATTERIEMODULEN SOWIE ENERGIESPEICHERSYSTEM (ESS) UND FAHRZEUG DAMIT
BLOC-BATTERIE AYANT UNE STRUCTURE POUR EMPÊCHER LA DIFFUSION DE CHALEUR ENTRE DES MODULES DE BATTERIE ADJACENTS, ET VÉHICULE COMPRENANT CELUI-CI

(30) Priority: 03.07.2020 KR 20200082379
(43) Date of publication of application: 05.10.2022
(73) Proprietor: LG Energy Solution, Ltd., Seoul 07335 (KR)
(72) Inventor: LEE, Jin-Kyu, Daejeon 34122 (KR)
(74) Representative: Plasseraud IP
(86) International application number: PCT/KR2021/007915
(87) International publication number: WO 2022/005095

(56) References cited:
- WO-A1-2019/167689
- JP-A- 2006 196 230
- JP-B2- 6 681 551
- JP-B2- 6 681 551
- KR-A- 20130 136 157
- KR-A- 20190 018 389
- KR-A- 20190 143 277
- US-A1- 2011 159 340

## Description

### TECHNICAL FIELD

The present application claims priority to Korean Patent Application No. 10-2020-0082379 filed on July 3, 2020 in the Republic of Korea.

The present disclosure relates to a battery pack having a heat diffusion prevention structure between adjacent battery modules, and an ESS and a vehicle including the battery pack, and more particularly, to a battery pack having a structure capable of minimizing heat transfer to adjacent battery modules when at least one battery module is heated among a plurality of battery modules of the battery pack, and an ESS and a vehicle including the battery pack.

### BACKGROUND ART

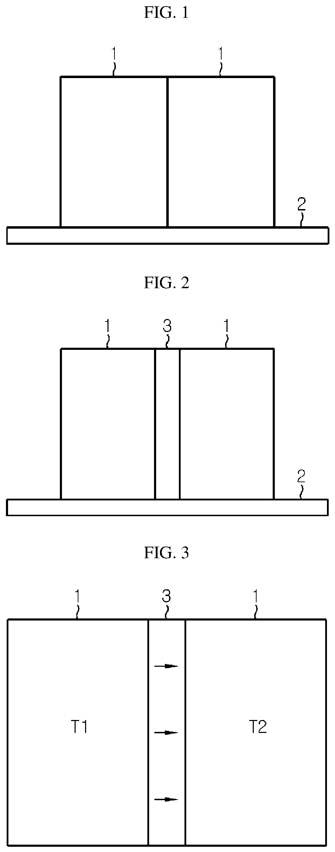

A conventional battery pack as shown in FIG. 1 includes a battery module stack having at least a pair of adjacent battery modules 1 and a heatsink 2 provided at one side of the battery module stack. In the battery pack, the temperature of each battery module 1 may be maintained within a normal range by cooling in such a way that heat generated in the battery module 1 is discharged to the outside through the heatsink 2 in a normal use situation.

However, if one or more battery modules are abnormally heated among the plurality of battery modules 1 of the battery module stack, heat exceeding an amount that can be discharged through the heatsink 2 may be generated. In this case, the heat that is not discharged through the heatsink 2 may be diffused to adjacent battery modules 1, which may lead to ignition and/or explosion of the entire battery modules 1.

Referring to FIG. 2, a thermal insulation pad 3 may be applied to prevent heat from being diffused from the battery module 1 that is abnormally heated to adjacent battery modules 1 as described above. However, even in this case, if the heat dissipation through the heatsink 2 reaches the limit, heat diffusion between the adjacent battery modules 1 is unavoidable despite the thermal insulation pad 3.

As shown in FIG. 3, the amount of heat energy transferred from a battery module 1 having an abnormally high temperature (T1) due to abnormal heat generation to a battery module 1 having a temperature (T2) within a normal range is proportional to a temperature difference (T2 - T1) between the two battery modules 1 and is inversely proportional to the width of the thermal insulation pad 3. Therefore, in a situation where the temperature difference (T2 - T1) is very large due to abnormal heat generation, even if the thermal insulation pad 3 with a low thermal conductivity coefficient is used, it is difficult to prevent heat diffusion between the battery modules 1 unless the thermal insulation pad 3 has a very large width. Documents WO 2019/167689, US 2011/159340 and JP 6 681551 discloses battery pack with heat management devices.

In order to maximize the heat diffusion prevention effect, it is important to increase the width of the thermal insulation pad 3. However the increase in the width of the thermal insulation pad 3 causes a loss of energy density of the battery pack, so the increase in the width of the thermal insulation pad 3 is inevitably limited.

Therefore, structural improvement is required to prevent heat from being diffused to the entire battery modules due to abnormal heat generated in some battery modules of the battery pack.

### DISCLOSURE

### Technical Problem

The present disclosure is designed to solve the problems of the related art, and therefore the present disclosure is directed to preventing or minimizing heat diffusion to entire battery modules due to abnormal heat generated in some battery modules of a battery pack.

However, the technical problem to be solved by the present disclosure is not limited to the above, and other objects not mentioned herein will be understood from the following description by those skilled in the art.

### Technical Solution

In one aspect of the present disclosure, there is provided a battery pack, comprising: a battery module stack configured to include a first battery module and a second battery module disposed adjacent to each other; a battery pack case configured to accommodate the battery module stack; a heat spreader sheet interposed between the first battery module and the second battery module; and a thermal insulation pad interposed between the first battery module and the second battery module.

The heat spreader sheet includes a first heat spreader sheet adjacent to the first battery module; and a second heat spreader sheet adjacent to the second battery module.

The thermal insulation pad includes a first thermal insulation pad interposed between the first heat spreader sheet and the second heat spreader sheet; and a second thermal insulation pad interposed between the first heat spreader sheet and the first battery module and between the second heat spreader sheet and the second battery module, respectively.

One side end of the first heat spreader sheet in a longitudinal direction is bent to face an upper surface of the first battery module, and one side end of the second heat spreader sheet in a longitudinal direction is bent to face an upper surface of the second battery module.

The bent side end of the first heat spreader sheet and the bent side end of the second heat spreader sheet may be in contact with the battery pack case, respectively.

The thermal insulation pad may further include a third thermal insulation pad interposed between the bent side end of the first heat spreader sheet and the upper surface of the first battery module and between the bent side end of the second heat spreader sheet and the upper surface of the second battery module, respectively.

The other side end of the first heat spreader sheet and the other side end of the second heat spreader sheet may not be in contact with the heatsink and the battery pack case, respectively.

In another aspect of the present disclosure, there is provided a battery pack, a battery module stack configured to include a first battery module and a second battery module disposed adjacent to each other; a battery pack case configured to accommodate the battery module stack; a heat spreader sheet interposed between the first battery module and the second battery module; and an thermal insulation pad interposed between the first battery module and the second battery module.

At least one of one side end and the other side end of the first heat spreader sheet in a longitudinal direction may be bent to face an upper surface of the first battery module, and at least one of one side end and the other side end of the second heat spreader sheet in a longitudinal direction may be bent to face an upper surface of the second battery module.

The thermal insulation pad may further include a third thermal insulation pad interposed between the bent side end of the first heat spreader sheet and the upper surface of the first battery module and between the bent side end of the second heat spreader sheet and the upper surface of the second battery module, respectively.

In another aspect of the present disclosure, there is provided an ESS, comprising the battery pack according to the present disclosure.

In another aspect of the present disclosure, there is provided a vehicle, comprising the battery pack according to the present disclosure.

### Advantageous Effects

According to an embodiment of the present disclosure, it is possible to prevent or minimize heat diffusion to entire battery modules due to abnormal heat generated in some battery modules of a battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIGS. 1 to 3 are diagrams showing a conventional battery pack.
FIGS. 4 to 6 diagrams showing a battery pack according to an embodiment of the present disclosure.
FIGS. 7 and 8 are diagrams for illustrating a path along which heat generated from a battery module is discharged.
FIGS. 9 and 10 diagrams showing a battery pack according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other modifications could be made thereto without departing from the scope of the invention as defined by the appended claims.

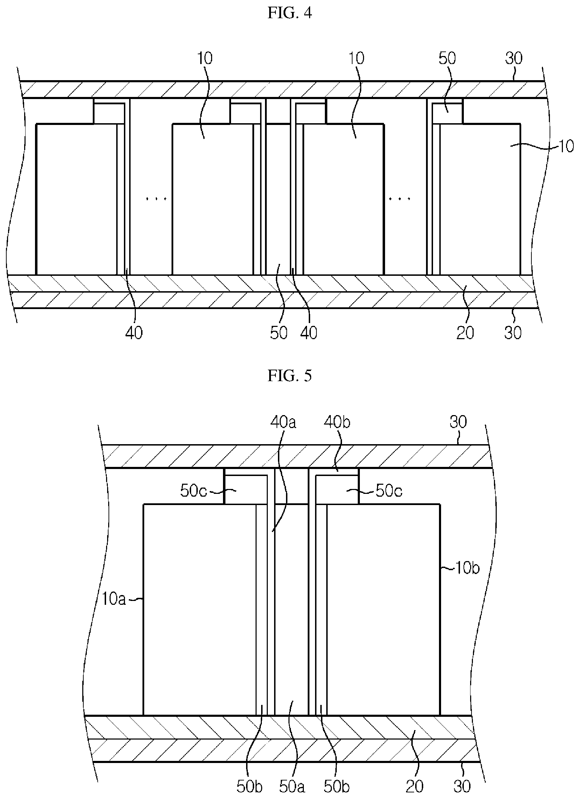

A battery pack according to an embodiment of the present disclosure will be described with reference to FIGS. 4 to 6.

First, referring to FIG. 4, the battery pack according to an embodiment of the present disclosure includes a plurality of battery modules 10, a heatsink 20, a battery pack case 30, a heat spreader sheet 40 and a thermal insulation pad 50.

The plurality of battery modules 10 are stacked in a state of facing each other to form one battery module stack. The plurality of battery modules 10 includes a first battery module 10a and a second battery module 10b disposed adjacent to each other. Each of the battery modules 10 includes a plurality of battery cells (not shown) and a module case for accommodating the plurality of battery cells.

The heatsink 20 is interposed between a lower portion of the battery module stack and the battery pack case 30 or provided to contact a bottom of the battery pack case 30. That is, the heatsink 20 may be located in the battery pack case 30 to directly contact the battery modules 10, or alternatively, the heatsink 20 may be located out of the battery pack case 30 to indirectly contact the battery modules 10 via the battery pack case 30. As described above, the heatsink 20 is in direct or indirect contact with lower surfaces of the plurality of battery modules 10 including the first battery module 10a and the second battery module 10b to discharge heat generated from the battery modules 10 to the outside. The heatsink 20 may be a water-cooling or air-cooling member.

If the heatsink 20 is located inside the battery pack case 30, in order to perform the heat discharge function, a portion of the heatsink 20 may penetrate the battery pack case 30 and be exposed to the outside of the battery pack. In addition, if the heatsink 20 is in a water-cooling type, a coolant inlet and a coolant outlet connected to the heatsink 20 to supply a coolant to the inside of the heatsink 20 and discharge the coolant to the outside of the heatsink 20 may be drawn out of the battery pack through the battery pack case 30. That is, the heatsink 20 may be located inside the battery pack case 30, and the coolant inlet and coolant outlet may be drawn out of the battery pack case 30.

The battery pack case 30 accommodates the battery module stack. The battery pack case 30 may further accommodate the heatsink 20 in addition to the battery module stack. The battery pack case 30 may be made of a metal material having excellent thermal conductivity to ensure rigidity of the battery pack and to easily discharge heat generated from the battery module stack to the outside.

The heat spreader sheet 40 and the thermal insulation pad 50 form one heat diffusion prevention member. The heat diffusion prevention member is interposed between battery modules 10 adjacent to each other, respectively. The heat diffusion prevention member effectively prevents heat energy from being transferred between the battery modules 10 when heat exceeding the cooling performance of the heatsink 20 is generated due to abnormal heat generation of at least one of the plurality of battery modules 10. The heat diffusion prevention member primarily delays the heat diffusion between adjacent battery modules 10 using the thermal insulation pad 50, and the heat diffusion prevention member secondarily disperses the heat transferred along a thickness direction of the thermal insulation pad 50 despite the application of the thermal insulation pad 50 toward an upper portion of the battery pack, thereby minimizing heat diffusion to prevent rapid transition of thermal runaway.

The heat spreader sheet 40 is made of, for example, a graphite sheet, and has a very high heat transfer rate in an in-plane direction, namely in a direction parallel to the wide surface of the sheet, rather than a thickness direction of the sheet.

Referring to FIG. 5 , the heat spreader sheet 40 includes a first heat spreader sheet 40a located adjacent to the first battery module 10a and a second heat spreader sheet 40b located adjacent to the second battery module 10b. The first heat spreader sheet 40a is shaped such that one side end thereof in a longitudinal direction extends to the upper portion of the battery module stack. In addition, the first heat spreader sheet 40a is shaped such that one side end thereof in the longitudinal direction is bent to face an upper surface of the first battery module 10a.

Similarly, the second heat spreader sheet 40b is shaped such that one side end thereof in the longitudinal direction extends to the upper portion of the battery module stack. In addition, the second heat spreader sheet 40b is shaped such that one side end thereof in the longitudinal direction is bent to face an upper surface of the second battery module 10b. The bent side end of the first heat spreader sheet 40a and the bent side end of the second heat spreader sheet 40b are spaced apart from the upper surfaces of the first battery module 10a and the second battery module 10b, respectively. This is to prevent heat energy dispersed upward through the first heat spreader sheet 40a and the second heat spreader sheet 40b from being transferred toward the battery module 10 again.

The bent side end of the first heat spreader sheet 40a and the bent side end of the second heat spreader sheet 40b may be in direct contact with the battery pack case 30, respectively. In addition, unlike this, a TIM (thermal interface material) (not shown) may be interposed between the bent side end of the first heat spreader sheet 40a and the battery pack case 30 and between the bent side end of the second heat spreader sheet 40b and the battery pack case 30, respectively.

The thermal insulation pad 50 includes a first thermal insulation pad 50a and a second thermal insulation pad 50b. The first thermal insulation pad 50a is interposed between the first heat spreader sheet 40a and the second heat spreader sheet 40b. The second thermal insulation pad 50b is interposed between the first heat spreader sheet 40a and the first battery module 10a and between the second heat spreader sheet 40b and the second battery module 10b, respectively.

Meanwhile, the thermal insulation pad 50 may further include a third thermal insulation pad 50c in addition to the first thermal insulation pad 50a and the second thermal insulation pad 50b. The third thermal insulation pad 50c is interposed between the bent side end of the first heat spreader sheet 40a and the upper surface of the first battery module 10a and between the bent side end of the second heat spreader sheet 40b and the upper surface of the second battery module 10b, respectively. The third thermal insulation pad 50c prevents the heat energy dispersed upward through the first heat spreader sheet 40a and the second heat spreader sheet 40b from being transferred toward the battery module 10 again.

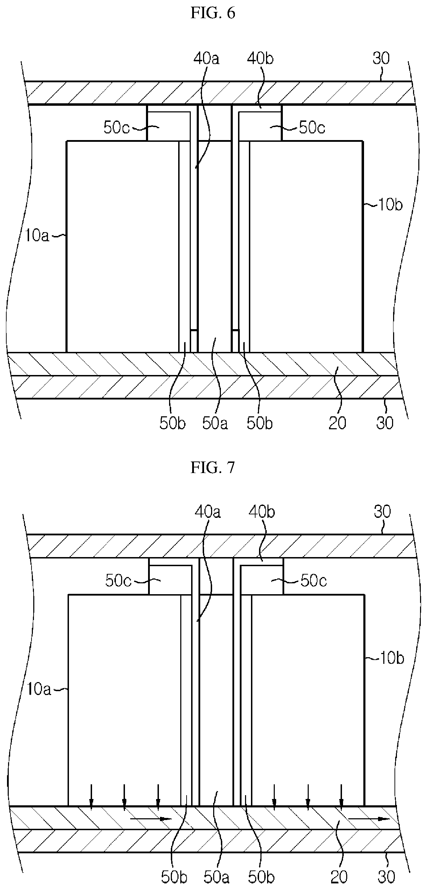

Meanwhile, referring to FIG. 6, the other side end of the first heat spreader sheet 40a in the longitudinal direction and the other side end of the second heat spreader sheet 40b in the longitudinal direction are not in contact with the heatsink 20 and the battery pack case 30, respectively, unlike FIG. 5. This is because, in a situation where the heatsink 20 cannot perform normal cooling due to abnormal heat generation of some battery modules 10, preventing additional heat energy from being transferred to the heatsink 20 through the heat spreader sheet 40 may further increase the efficiency of heat energy dispersion.

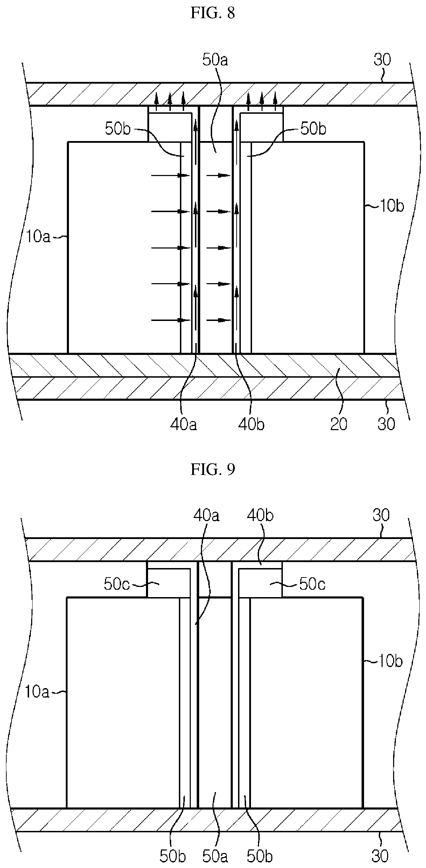

Referring to FIGS. 7 and 8, in the battery pack according to an embodiment of the present disclosure, a movement direction of heat energy when normal cooling is performed and a dispersion direction of heat energy when some battery modules 10 are abnormally heated are shown.

Referring to FIG. 7, in the case of normal cooling, the heat energy generated in the battery modules 10a, 10b is discharged along the arrow direction through the heatsink 20 interposed between the lower portion of the battery module stack and the battery pack case 30 or provided to contact the bottom of the battery pack case 30, and thus heat transfer is not generated between the battery modules 10a, 10b.

However, if cooling through the heatsink 20 is no longer performed smoothly since, for example, abnormal heat is generated in the first battery module 10a, heat transfer is generated along the arrow direction shown in FIG. 8 from the first battery module 10a toward the second battery module 10b. In this case, the second thermal insulation pad 50b primarily lowers the diffusion rate of heat energy, and the heat energy transferred along the thickness direction of the second thermal insulation pad 50b is secondarily dispersed upward by the first heat spreader sheet 40a and discharged to the outside through the battery pack case 30. In addition, the heat energy transferred along the thickness direction of the first heat spreader sheet 40a is slowed down again by means of the first thermal insulation pad 50a, and the heat energy transferred through the thickness direction of the first thermal insulation pad 50a is dispersed upward by the second heat spreader sheet 40b and discharged to the outside through the battery pack case 30. In addition, the diffusion rate of the remaining heat energy transferred toward the second battery module 10b along the thickness direction of the second heat spreader sheet 40b is minimized by means of the first thermal insulation pad 50a.

As described above, the battery pack according to an embodiment of the present disclosure may prevent the thermal runaway phenomenon caused by abnormal heat generation in some battery modules 10 from being rapidly transferred by minimizing the heat energy transferred between adjacent battery modules 10a, 10b when heat energy exceeding the cooling capacity of the heatsink 20 is generated.

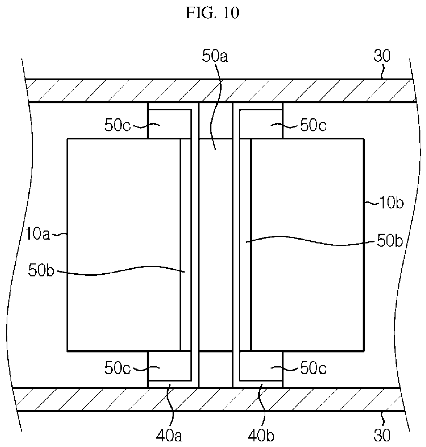

Next, a battery pack according to another embodiment of the present disclosure will be described with reference to FIGS. 9 and 10.

The battery pack according to another embodiment of the present disclosure is substantially identical to the battery pack according to an embodiment of the present disclosure described above, except that the heatsink 20 functioning as a cooling member is omitted and the specific structure of the heat diffusion prevention member is somewhat different. Accordingly, in describing the battery pack according to another embodiment of the present disclosure, the features identical to those of the former embodiment will not be described in detail and only features different therefrom will be described in detail.

Since the heatsink 20 is omitted in the battery pack according to another embodiment of the present disclosure, unlike in the former embodiment, cooling is performed through the battery pack case 30.

The heatsink 20 is omitted because, in consideration of the capacity of the battery pack, there is no need to additionally provide a cooling member for forced cooling since much heat is not generated during normal use. However, if abnormal heat is generated in, for example, the first battery module 10a, a sufficient cooling rate may not be ensured only by discharging heat energy through the battery pack case 30, so heat transfer may be generated between the battery modules 10a, 10b.

Referring to FIG. 9, in order to prevent or minimize such heat transfer, the battery pack according to another embodiment of the present disclosure includes a heat diffusion prevention member interposed between adjacent battery modules 10a, 10b, as in the former embodiment. In this case, the lower surfaces of the plurality of battery modules 10a, 10b are in contact with the battery pack case 30.

Referring to FIG. 10, in the battery pack according to another embodiment of the present disclosure, unlike that shown in FIG. 9, both the first heat spreader sheet 40a and the second heat spreader sheet 40b extend in both directions at the upper and lower portions of the battery module stack. In addition, the first heat spreader sheet 40a is bent not only at one side end thereof in the longitudinal direction but also at the other side end thereof to face the lower surface of the first battery module 10a. Similarly, the second heat spreader sheet 40b is also bent not only at one side end thereof in the longitudinal direction but also at the other side end thereof to face the lower surface of the second battery module 10b.

Accordingly, the third thermal insulation pad 50c may also be interposed between the bent other side end of the first heat spreader sheet 40a and the lower surface of the first battery module 10a and between the bent other side end of the second heat spreader sheet 40b and the lower surface of the second battery module 10b.

Meanwhile, the battery pack according to the present disclosure as described above may be applied as a battery pack for a vehicle, and may also be applied as a battery pack for an energy storage system (ESS). Therefore, the vehicle and the ESS according to an embodiment of the present disclosure include at least one battery pack according to the present disclosure, respectively.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

10: battery module
10a: first battery module
10b: second battery module
20: heatsink
30: battery pack case
40: heat spreader sheet
40a: first heat spreader sheet
40b: second heat spreader sheet
50: thermal insulation pad
50a: first thermal insulation pad
50b: second thermal insulation pad
50c: third thermal insulation pad

## Claims

1. A battery pack, comprising:
a battery module (10) stack configured to include a first battery module (10a) and a second battery module (10b) disposed adjacent to each other;
a battery pack case (30) configured to accommodate the battery module stack;
a heat spreader sheet (40) interposed between the first battery module and the second battery module; and
a thermal insulation pad (50) interposed between the first battery module and the second battery module,
wherein the heat spreader sheet (40) includes:
a first heat spreader sheet (40a) adjacent to the first battery module (10a); and
a second heat spreader sheet (40b) adjacent to the second battery module (10b),
wherein the thermal insulation pad (50) includes:
a first thermal insulation pad (50a) interposed between the first heat spreader sheet (40a) and the second heat spreader sheet (40b); and
a second thermal insulation pad (50b) interposed between the first heat spreader sheet (40a) and the first battery module (10a) and between the second heat spreader sheet (40b) and the second battery module (10b), respectively,
**characterized in that**
one side end of the first heat spreader sheet (40a) in a longitudinal direction is bent to face an upper surface of the first battery module (10a), and
one side end of the second heat spreader sheet (40b) in a longitudinal direction is bent to face an upper surface of the second battery module (10b).

2. The battery pack according to claim 1,
wherein the bent side end of the first heat spreader sheet (40a) and the bent side end of the second heat spreader sheet (40b) are in contact with the battery pack case (30), respectively.

3. The battery pack according to claim 1,
wherein the thermal insulation pad (50) further includes a third thermal insulation pad (50c) interposed between the bent side end of the first heat spreader sheet (40a) and the upper surface of the first battery module (10a) and between the bent side end of the second heat spreader sheet (40b) and the upper surface of the second battery module (10b), respectively.

4. The battery pack according to anyone of the preceding claims, further comprising a heatsink (20) interposed between a lower portion of the battery module stack and the battery pack case (30) or provided to contact a bottom of the battery pack case.

5. The battery pack according to claim 4,
wherein the other side end of the first heat spreader sheet (40a) in the longitudinal direction and the other side end of the second heat spreader sheet (40b) in the longitudinal direction are not in contact with the heatsink (20) and the battery pack case (30), respectively.

6. An energy storage system, comprising the battery pack according to any one of claims 1 to 5.

7. A vehicle, comprising the battery pack according to any one of claims 1 to 5.

## Patentansprüche

1. Batteriepack, umfassend:
einen Batteriemodul (10)-Stapel, welcher dazu eingerichtet ist, ein erstes Batteriemodul (10a) und ein zweites Batteriemodul (10b) zu umfassen, welche benachbart zueinander angeordnet sind;
ein Batteriepack-Gehäuse (30), welches dazu eingerichtet ist, den Batteriemodul-Stapel aufzunehmen;
eine Wärme-Verteilungsbahn (40), welche zwischen dem ersten Batteriemodul und dem zweiten Batteriemodul eingefügt ist; und
ein thermisches Isolationskissen (50), welches zwischen dem ersten Batteriemodul und dem zweiten Batteriemodul eingefügt ist,
wobei die Wärme-Verteilungsbahn (40) umfasst:
eine erste Wärme-Verteilungsbahn (40a) benachbart zu dem ersten Batteriemodul (10a); und
eine zweite Wärme-Verteilungsbahn (40b) benachbart zu dem zweiten Batteriemodul (10b),
wobei das thermische Isolationskissen (50) umfasst:
ein erstes thermisches Isolationskissen (50a), welches zwischen der ersten Wärme-Verteilungsbahn (40a) und der zweiten Wärme-Verteilungsbahn (40b) eingefügt ist; und
ein zweites thermisches Isolationskissen (50b), welches jeweils zwischen der ersten Wärme-Verteilungsbahn (40a) und dem ersten Batteriemodul (10a) und zwischen der zweiten Wärme-Verteilungsbahn (40b) und dem zweiten Batteriemodul (10b) eingefügt ist,
**dadurch gekennzeichnet, dass**
ein Seitenende der ersten Wärme-Verteilungsbahn (40a) in einer longitudinalen Richtung dazu gebogen ist, zu einer oberen Fläche des ersten Batteriemoduls (10a) zu weisen, und
ein Seitenende der zweiten Wärme-Verteilungsbahn (40b) in einer longitudinalen Richtung dazu gebogen ist, zu einer oberen Fläche des zweiten Batteriemoduls (10b) zu weisen.

2. Batteriepack nach Anspruch 1,
wobei das gebogene Seitenende der ersten Wärme-Verteilungsbahn (40a) und das gebogene Seitenende der zweiten Wärme-Verteilungsbahn (40b) jeweils in Kontakt mit dem Batteriepack-Gehäuse (30) sind.

3. Batteriepack nach Anspruch 1,
wobei das thermische Isolationskissen (50) ferner ein drittes thermisches Isolationskissen (50c) umfasst, welches jeweils zwischen dem gebogenen Seitenende der ersten Wärme-Verteilungsbahn (40a) und der oberen Fläche des ersten Batteriemoduls (10a) und zwischen dem gebogenen Seitenende der zweiten Wärme-Verteilungsbahn (40b) und der oberen Fläche des zweiten Batteriemoduls (10b) eingefügt ist.

4. Batteriepack nach einem der vorhergehenden Ansprüche, ferner umfassend eine Wärmesenke (20), welche zwischen einem unteren Abschnitt des Batteriemodul-Stapels und dem Batteriepack-Gehäuse (30) eingefügt oder dazu bereitgestellt ist, eine Unterseite des Batteriepack-Gehäuses zu kontaktieren.

5. Batteriepack nach Anspruch 4,
wobei das andere Seitenende der ersten Wärme-Verteilungsbahn (40a) in der longitudinalen Richtung und das andere Seitenende der zweiten Wärme-Verteilungsbahn (40b) in der longitudinalen Richtung jeweils nicht in Kontakt mit der Wärmesenke (20) und dem Batteriepack (30) sind.

6. Energie-Speichersystem, umfassend den Batteriepack nach einem der Ansprüche 1 bis 5.

7. Fahrzeug, umfassend den Batteriepack nach einem der Ansprüche 1 bis 5.

## Revendications

1. Bloc-batterie, comprenant :
un empilement de modules de batterie (10) configuré pour comporter un premier module de batterie (10a) et un deuxième module de batterie (10b) disposés adjacents l'un à l'autre ;
un boîtier de bloc-batterie (30) configuré pour accueillir l'empilement de modules de batterie ;
une feuille de diffusion de chaleur (40) interposée entre le premier module de batterie et le deuxième module de batterie ; et
un tampon d'isolation thermique (50) interposé entre le premier module de batterie et le deuxième module de batterie,
dans lequel la feuille de diffusion de chaleur (40) comporte :
une première feuille de diffusion de chaleur (40a) adjacente au premier module de batterie (10a) ; et
une deuxième feuille de diffusion de chaleur (40b) adjacente au deuxième module de batterie (10b),
dans lequel le tampon d'isolation thermique (50) comporte :
un premier tampon d'isolation thermique (50a) interposé entre la première feuille de diffusion de chaleur (40a) et la deuxième feuille de diffusion de chaleur (40b) ; et
un deuxième tampon d'isolation thermique (50b) interposé entre la première feuille de diffusion de chaleur (40a) et le premier module de batterie (10a) et entre la deuxième feuille de diffusion de chaleur (40b) et le deuxième module de batterie (10b), respectivement,
**caractérisé en ce que**
une extrémité latérale de la première feuille de diffusion de chaleur (40a) dans une direction longitudinale est courbée pour faire face à une surface supérieure du premier module de batterie (10a), et
une extrémité latérale de la deuxième feuille de diffusion de chaleur (40b) dans une direction longitudinale est courbée pour faire face à une surface supérieure du deuxième module de batterie (10b).

2. Bloc-batterie selon la revendication 1,
dans lequel l'extrémité latérale courbée de la première feuille de diffusion de chaleur (40a) et l'extrémité latérale courbée de la deuxième feuille de diffusion de chaleur (40b) sont en contact avec le boîtier de bloc-batterie (30), respectivement.

3. Bloc-batterie selon la revendication 1,
dans lequel le tampon d'isolation thermique (50) comporte en outre un troisième tampon d'isolation thermique (50c) interposé entre l'extrémité latérale courbée de la première feuille de diffusion de chaleur (40a) et la surface supérieure du premier module de batterie (10a) et entre l'extrémité latérale courbée de la deuxième feuille de diffusion de chaleur (40b) et la surface supérieure du deuxième module de batterie (10b), respectivement.

4. Bloc-batterie selon l'une quelconque des revendications précédentes, comprenant en outre un dissipateur thermique (20) interposé entre une partie inférieure de l'empilement de modules de batterie et le boîtier de bloc-batterie (30) ou prévu pour entrer en contact avec un fond du boîtier de bloc-batterie.

5. Bloc-batterie selon la revendication 4,
dans lequel l'autre extrémité latérale de la première feuille de diffusion de chaleur (40a) dans la direction longitudinale et l'autre extrémité latérale de la deuxième feuille de diffusion de chaleur (40b) dans la direction longitudinale ne sont pas en contact avec le dissipateur thermique (20) ni le boîtier de bloc-batterie (30), respectivement.

6. Système de stockage d'énergie, comprenant le bloc-batterie selon l'une quelconque des revendications 1 à 5.

7. Véhicule, comprenant le bloc-batterie selon l'une quelconque des revendications 1 à 5.
